# EUROPEAN PATENT SPECIFICATION

(11) **EP 3 806 181 B1**
(45) Date of publication and mention of the grant of the patent: **17.05.2023**
(21) Application number: 18921500.7
(22) Date of filing: 05.06.2018
(51) Int. Cl.: H01M 10/613, H01M 10/625, H01M 10/6561, H01M 10/647, H01M 10/6556, H01M 50/103, H01M 50/169, H01M 50/209

(54) **SECONDARY BATTERY AND BATTERY PACK**
SEKUNDÄRBATTERIE UND BATTERIEPACK
ACCUMULATEUR, ET BATTERIE

(43) Date of publication of application: 14.04.2021
(73) Proprietor: KABUSHIKI KAISHA TOSHIBA, Minato-ku Tokyo 105-0023 (JP)
(72) Inventor: OHNO, Motoharu, Kawasaki-shi, Kanagawa 212-0013 (JP)
(74) Representative: AWA Sweden AB
(86) International application number: PCT/JP2018/021602
(87) International publication number: WO 2019/234833

(56) References cited:
- EP-A1- 3 054 503
- WO-A1-2011/073426
- WO-A1-2016/204147
- JP-A- 2005 294 023
- JP-A- 2013 218 930
- JP-A- 2013 218 930
- US-A1- 2008 187 820
- US-A1- 2016 351 978

## Description

### FIELD

Embodiments described herein relate generally to a secondary battery and a battery pack including the secondary battery.

### BACKGROUND

Generally, a secondary battery includes an electrode group including a positive electrode and a negative electrode, and a container that accommodates the electrode group. There is a secondary battery in which a container is composed of two container members, each of which is made of a metal such as stainless steel. In such a secondary battery, the first container member, which is one of the container members, is formed in a tubular shape with a bottom provided with a bottom wall and side walls, and an accommodating space that accommodates an electrode group is defined by the bottom wall and the side walls. The accommodating space has an opening opposite to the bottom wall. In the first container member, a flange is formed at a portion opposite to the bottom wall. In such a secondary battery, the second container member is arranged to face the flange, and closes the opening of the accommodating space. The flange and the second container member project outward from an opening edge with respect to the side walls. The flange and the second container member are hermetically welded over the entire perimeter of the opening on an outer side of the opening edge. The accommodating space is sealed off from the outside by the welding of the flange and the second container member.

In the secondary battery as described above, heat may be generated by charging and discharging, etc., and the temperature of the secondary battery may rise. Therefore, when the secondary battery is used, effective cooling is required.

US 2008/187820 A1 relates to a case for a film-covered electrical device and a film-covered electrical device assemblage.

### CITATION LIST

### PATENT LITERATURE

Patent Literature 1: International Publication No. 2016/204147

### SUMMARY

### TECHNICAL PROBLEM

An object to be achieved by the present invention is to provide a secondary battery which is effectively cooled, and a battery pack including the secondary battery.

### SOLUTION TO PROBLEM

According to one embodiment, a secondary battery includes a first container member, second container member and electrode group. The first container member includes a bottom wall and side walls, and is made of a metal. An accommodating space is defined by the bottom wall and the side walls in the first container member, and the accommodating space has an opening on a side opposite to the bottom wall. The first container member includes a flange on the side opposite to the bottom wall, and the flange projects outward from an opening edge of the opening with respect to the side walls. The electrode group includes a positive electrode and a negative electrode, and is accommodated in the accommodating space. The second container member is made of a metal, and arranged to face the flange in a state of closing the opening of the accommodating space. The second container member is welded to the flange. The attachment member is attached to the first container member in the secondary battery. The attachment member includes a base abutting on an outer surface of the bottom wall, and a side plate part extended from the base toward a side on which the flange is located. The side plate part is provided over at least a partial range in a circumferential direction of the opening. The side plate part faces an outer surface of the side wall of the first container member with a gap between the side plate part and the side wall. A passage for a refrigerant is defined in the gap between the side plate part and the side wall. The attachment member includes an insulating layer. A surface of the base and the side plate part that faces a side opposite to a side on which the first container member is located is formed of the insulating layer. The attachment member includes a metal layer stacked adjacent to the insulating layer in the base and the side plate part and have a higher thermal conductivity than that of the insulating layer. The metal layer abuts on the outer surface of the bottom wall in the attachment member. The attachment member includes: an inward extending part in which the insulating layer and the metal layer are extended inwardly from the side plate part at a position away from the base toward a side on which the flange is located, and in which the metal layer is adjacent to a side on which the base is located with respect to the insulating layer; and a folded part provided at an inner end of the inward extending part, wherein the insulating layer and the metal layer are folded in a state where a surface facing inward is formed of the insulating layer.

### BRIEF DESCRIPTION OF THE DRAWINGS

FIG. 1 is a perspective view schematically showing a secondary battery according to a first embodiment.
FIG. 2 is a perspective view schematically showing a battery body according to the first embodiment.
FIG. 3 is a perspective view schematically showing the battery body according to the first embodiment in a state in which the battery body is disassembled for each member.
FIG. 4 is a schematic diagram of the secondary battery according to the first embodiment in a state of being viewed from a side on which a bottom wall is located in a thickness direction.
FIG. 5 is a schematic diagram showing the secondary battery according to the first embodiment in a state of being viewed from one side in a lateral direction.
FIG. 6 is a schematic diagram for explaining a configuration of an electrode group according to the first embodiment.
FIG. 7 is a schematic diagram showing a container and an attachment member according to the first embodiment, and showing the attachment member in a cross section perpendicular to or approximately perpendicular to the lateral direction.
FIG. 8 is a schematic diagram showing a container and an attachment member according to a first modification, and showing the attachment member in a cross section perpendicular to or approximately perpendicular to a lateral direction.
FIG. 9 is a schematic diagram showing a container and an attachment member according to a second modification, and showing the attachment member in a cross section perpendicular to or approximately perpendicular to a lateral direction.
FIG. 10 is a schematic diagram showing a container and an attachment member according to a third modification, and showing the attachment member in a cross section perpendicular to or approximately perpendicular to a lateral direction.
FIG. 11 is a perspective view schematically showing a battery pack as an application example in which the secondary battery according to the embodiment, etc. is applied.
FIG. 12 is a perspective view schematically showing a bus bar of the battery pack according to the application example.

### DETAILED DESCRIPTION

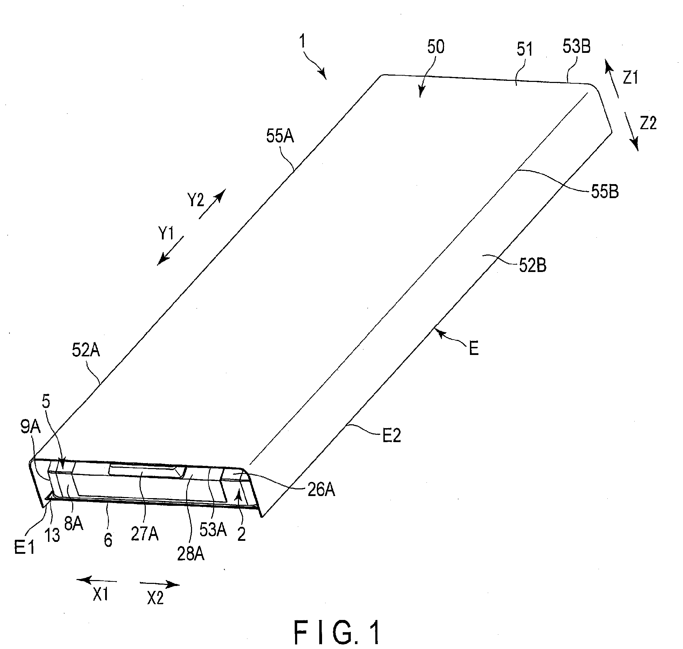

Hereinafter, the embodiments will be described with reference to FIGS. 1 to 12.

### (First Embodiment)

FIG. 1 shows a secondary battery 1 according to a first embodiment. The secondary battery 1 is, for example, a nonaqueous electrolyte battery. As shown in FIG. 1, the secondary battery 1 includes a battery body 2 and an attachment member 50 that is attached to the battery body 2.

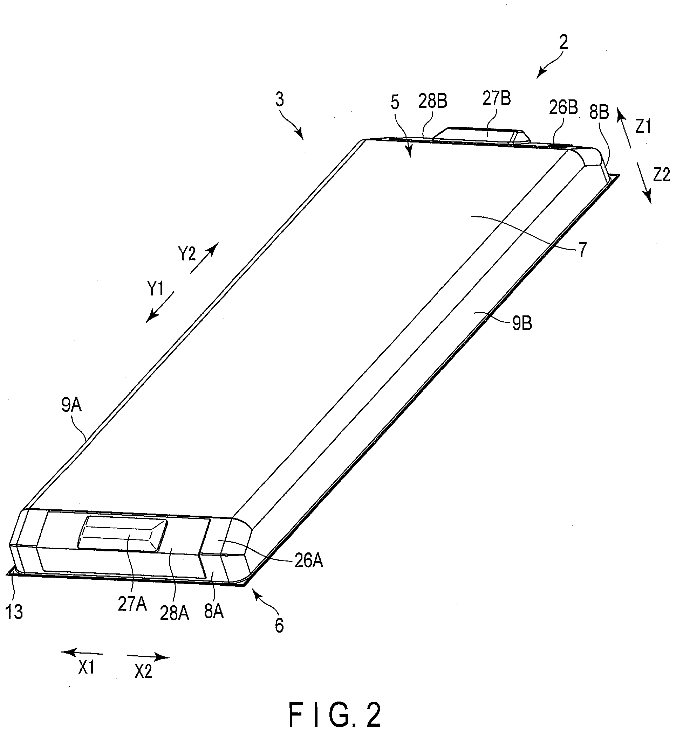

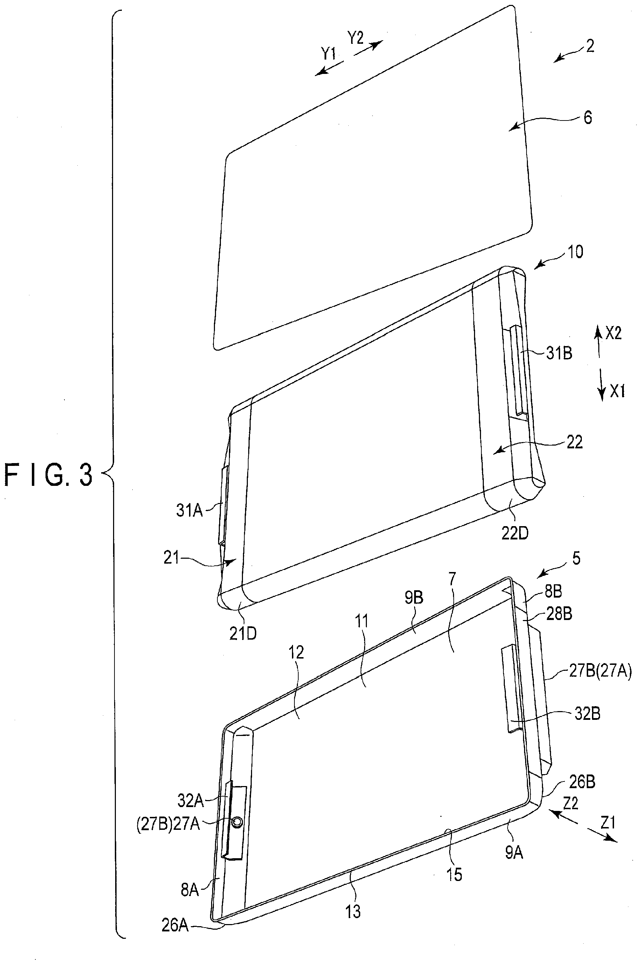

FIG. 2 shows the battery body 2, and FIG. 3 shows the battery body 2 disassembled for each member. As shown in FIGS. 1 to 3, the battery body 2 includes a container 3. The container 3 is formed of a first container member 5 and a second container member 6. Each of the container members 5 and 6 is made of a metal such as stainless steel. Examples of metal, other than stainless steel, forming the container members 5 and 6 include aluminum, an aluminum alloy, carbon steel, and plated steel. The first container member 5 is formed in a tubular shape with a bottom. In the present embodiment, the first container member 5 includes a bottom wall 7 and two pairs of side walls 8A, 8B, 9A, and 9B, and is formed in an approximately rectangular tubular shape with a bottom. In the first container member 5, an accommodating space 11 is defined by the bottom wall 7 and the side walls 8A, 8B, 9A, and 9B. An electrode group 10 is accommodated in the accommodating space 11.

The accommodating space 11 has an opening 12 on a side opposite to the bottom wall 7. Here, in the secondary battery 1, a depth direction (direction indicated by arrows X1 and X2), a lateral direction (direction indicated by arrows Y1 and Y2) perpendicular to or approximately perpendicular to (intersecting with) the depth direction, and a thickness direction (direction indicated by arrows Z1 and Z2) perpendicular to or approximately perpendicular to (intersecting with) the depth direction and also perpendicular to or approximately perpendicular to (intersecting with) the lateral direction, are defined. In the secondary battery 1, each of the pair of side walls (first side walls) 8A and 8B is extended along the depth direction, and is continuous in the depth direction from the side wall 9A to the side wall 9B. Each of the pair of side walls (second side walls) 9A and 9B is extended along the lateral direction, and is continuous in the lateral direction from the side wall 8A to the side wall 8B. The side walls 8A and 8B face each other, and are arranged apart from each other in the lateral direction with the accommodating space 11 interposed therebetween. The side walls 9A and 9B face each other, and are arranged apart from each other in the depth direction with the accommodating space 11 interposed therebetween. In addition, each of the side walls 8A, 8B, 9A, and 9B is extended along the thickness direction from the bottom wall 7 toward the opening 12, and the accommodating space 11 opens toward one side (arrow Z2 side) in the thickness direction in the opening 12. An opening surface of the opening 12 is parallel or approximately parallel to the depth direction and the lateral direction.

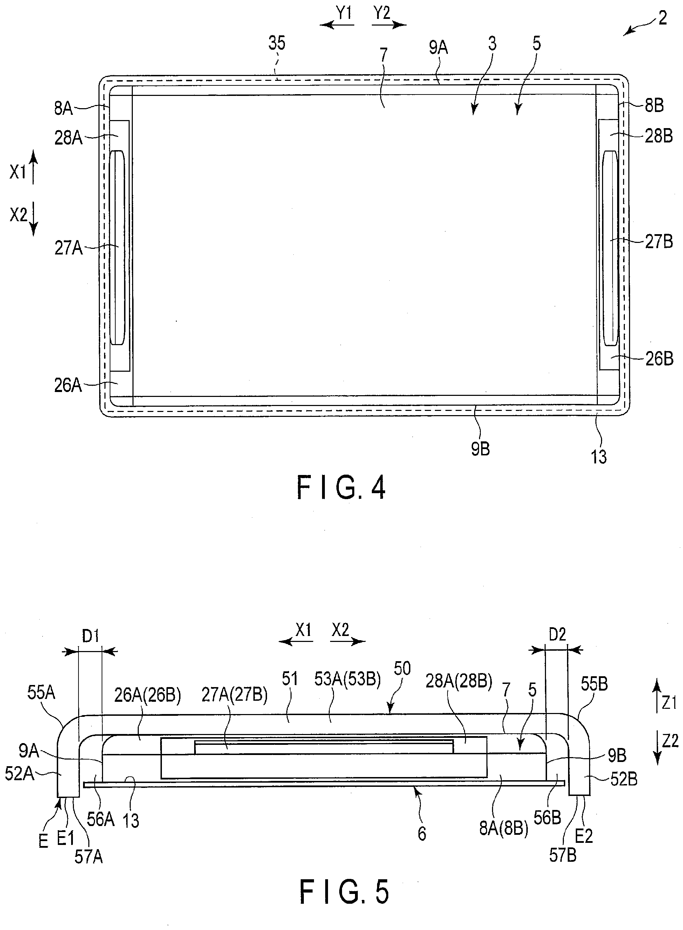

FIG. 4 shows the battery body 2 in a state of being viewed from the side (arrow Z1 side) on which the bottom wall 7 is located in the thickness direction of the secondary battery 1. FIG. 5 shows the secondary battery 1 in a state of being viewed from one side (e.g., arrow Y1 side) in the lateral direction. As shown in FIGS. 1 to 5, the first container member 5 is provided with a flange 13 at a portion opposite to the bottom wall 7. The flange 13 defines an opening edge 15 of the opening 12 over the entire perimeter in a circumferential direction of the opening 12. The flange 13 projects outward from the opening edge 15 over the entire perimeter in the circumferential direction of the opening 12. Therefore, the flange 13 projects to a side away from the opening 12 in a direction parallel to the opening surface of the opening 12, with respect to the side walls 8A, 8B, 9A, and 9B.

In the present embodiment, an area surrounded by the side walls 8A, 8B, 9A, and 9B in a cross section perpendicular to or approximately perpendicular to the thickness direction of the secondary battery 1 has a rectangular, or approximately rectangular, shape, but is not limited thereto. In an example, an area surrounded by side walls in a cross section perpendicular to or approximately perpendicular to the thickness direction of the secondary battery 1 may be formed in, for example, a polygonal shape or an elliptical shape, etc. other than a rectangular shape.

In the present embodiment, the second container member 6 is a plate-like member, and is formed in an approximately rectangular shape, for example. The second container member 6 is arranged to face the flange 13, and is attached to the flange 13 from a side on which the opening 12 opens. In the present embodiment, the second container member 6 projects outward from the opening edge 15 over the entire perimeter in the circumferential direction of the opening 12. Thus, the second container member 6 projects to a side away from the opening 12 in a direction parallel to the opening surface of the opening 12, with respect to the side walls 8A, 8B, 9A, and 9B. In an area outside the opening edge 15, the second container member 6 faces the flange 13 over the entire perimeter in the circumferential direction of the opening 12. The second container member 6 closes the opening 12 of the accommodating space 11. In the present embodiment, a thickness direction of the plate-like second container member 6 coincides with or approximately coincides with the thickness direction of the secondary battery 1 (battery body 2).

A distance from the bottom wall 7 to the opening 12 is much smaller than each of a distance between the side walls 8A and 8B and a distance between the side walls 9A and 9B. In the secondary battery 1, a dimension in the thickness direction is much smaller than each of a dimension in the depth direction and a dimension in the lateral direction. Further, in the present embodiment, the distance between the side walls 8A and 8B is larger than the distance between the side walls 9A and 9B, and in the secondary battery 1, the dimension in the lateral direction is larger than the dimension in the depth direction. Here, the distance between the side walls (first side walls) 8A and 8B corresponds to the dimension of the accommodating space 11 (opening 12) in the lateral direction of the secondary battery 1. The distance between the side walls (second side walls) 9A and 9B corresponds to the dimension of the accommodating space 11 (opening 12) in the depth direction of the secondary battery 1. The distance from the bottom wall 7 to the opening 12 corresponds to the dimension of the accommodating space 11 in the thickness direction of the secondary battery 1.

In an example, the thickness of the first container member 5 is from 0.02 mm to 0.3 mm in each of the bottom wall 7, side walls 8A, 8B, 9A, and 9B, and flange 13. The thickness of the plate-like second container member 6 is from 0.02 mm to 0.3 mm. A projecting dimension of the flange 13 and the second container member 6 from the opening edge 15 (side walls 8A, 8B, 9A, and 9B) to the outer side is about 2 mm to 5 mm. That is, a distance from the opening edge 15 of the opening 12 to an outer peripheral end (outer edge) of each of the flange 13 and the second container member 6 is about 2 mm to 5mm.

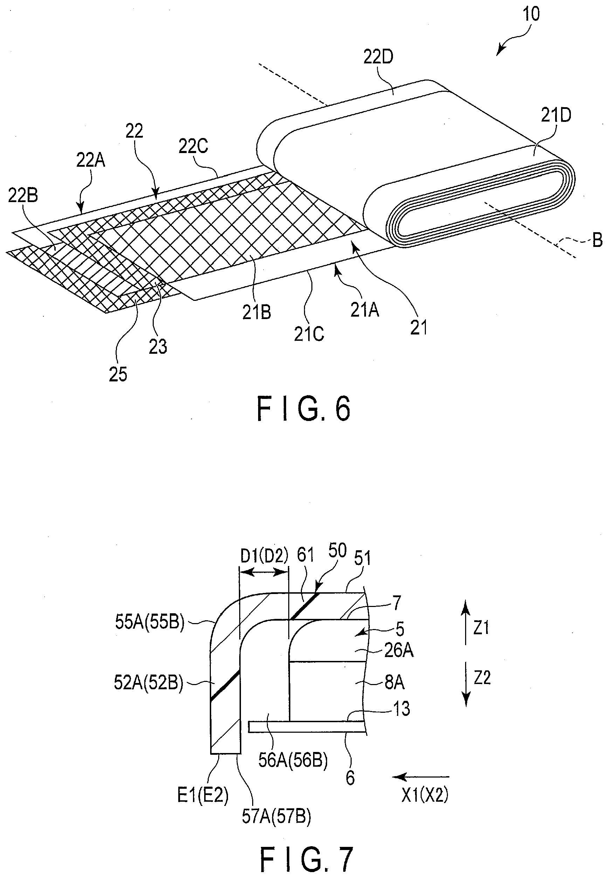

FIG. 6 is a diagram for explaining a configuration of the electrode group 10. As shown in FIG. 6, the electrode group 10 is formed into, for example, a flat shape, and includes a positive electrode 21, a negative electrode 22, and separators 23 and 25. The positive electrode 21 includes a positive electrode current collecting foil 21A serving as a positive electrode current collector, and a positive electrode active material-containing layer 21B supported on a surface of the positive electrode current collecting foil 21A. The positive electrode current collecting foil 21A is an aluminum foil or an aluminum alloy foil, etc., and has a thickness of about 10 um to 20 um. A slurry containing a positive electrode active material, a binder, and an electro-conductive agent is applied to the positive electrode current collecting foil 21A. The positive electrode active material may be, but is not particularly limited to, an oxide, a sulfide, and a polymer, which can occlude and release lithium, for example. For the positive electrode active material, it is preferable to use a lithium-manganese composite oxide, a lithium-nickel composite oxide, a lithium-cobalt composite oxide, and lithium iron phosphate, for example, since a high positive electrode electric potential can be obtained.

The negative electrode 22 includes a negative electrode current collecting foil 22A serving as a negative electrode current collector, and a negative electrode active material-containing layer 22B supported on a surface of the negative electrode current collecting foil 22A. The negative electrode current collecting foil 22A is an aluminum foil, an aluminum alloy foil, or a copper foil, etc., and has a thickness of about 10 um to 20 um. A slurry containing a negative electrode active material, a binder, and an electro-conductive agent is applied to the negative electrode current collecting foil 22A. The negative electrode active material may be, but is not particularly limited to, a metal oxide, a metal sulfide, a metal nitride, and a carbon material, which can occlude and release lithium ions, for example. The negative electrode active material is preferably a substance which occludes and releases lithium ions at an electric potential of 0.4 V or more with respect to a metal lithium electric potential, i.e., a substance which occludes and releases lithium ions at an electric potential of 0.4 V (vs. Li+/Li) or more. The reaction of aluminum or an aluminum alloy with lithium is suppressed by using the negative electrode active material having a lithium ion occlusion-and-release electric potential as described above, which allows for usage of aluminum and an aluminum alloy for the negative electrode current collecting foil 22A and a structural member related to the negative electrode 22. Examples of a negative electrode active material having a lithium ion occlusion-and-release electric potential of 0.4 V (vs. Li+/Li) or more are a titanium oxide, a lithium titanium composite oxide such as a lithium titanate, a tungsten oxide, an amorphous tin oxide, a niobium titanium composite oxide, a tin silicon oxide, and a silicon oxide, and it is particularly preferable to use a lithium titanium composite oxide as the negative electrode active material. When a carbon material which occludes and releases lithium ions is used as the negative electrode active material, a copper foil may be used as the negative electrode current collecting foil 22A. The carbon material used as the negative electrode active material has a lithium ion occlusion-and-release electric potential of about 0 V (vs. Li+/Li) .

The aluminum alloy used for the positive electrode current collecting foil 21A and the negative electrode current collecting foil 22A preferably includes one or more kinds of elements selected from Mg, Ti, Zn, Mn, Fe, Cu, and Si. The purity of the aluminum and the aluminum alloy may be set to 98% by weight or more, and is preferably 99.99% by weight or more. Pure aluminum having a purity of 100% can be used as a material for the positive electrode current collector and/or the negative electrode current collector. It is preferable to set the contained amount of transition metal such as nickel and chrome in the aluminum and the aluminum alloy to 100 ppm by weight or less (including 0 ppm by weight).

In the positive electrode current collecting foil 21A, a positive electrode current collecting tab 21D is formed of one long side edge 21C and its nearby portion. In the present embodiment, the positive electrode current collecting tab 21D is formed over the entire length of the long side edge 21C. In the positive electrode current collecting tab 21D, the positive electrode active material-containing layer 21B is not supported on the surface of the positive electrode current collecting foil 21A. In the negative electrode current collecting foil 22A, a negative electrode current collecting tab 22D is formed of one long side edge 22C and its nearby portion. In the present embodiment, the negative electrode current collecting tab 22D is formed over the entire length of the long side edge 22C. In the negative electrode current collecting tab 22D, the negative electrode active material-containing layer 22B is not supported on the surface of the negative electrode current collecting foil 22A.

Each of the separators 23 and 25 is made of an electrically insulating material, and electrically insulates between the positive electrode 21 and the negative electrode 22. Each of the separators 23 and 25 may be a separate sheet from the positive electrode 21 and the negative electrode 22, etc., or may be formed integrally with one of the positive electrode 21 and the negative electrode 22. The separators 23 and 25 may be made of an organic material, an inorganic material, or a mixture of an organic material and an inorganic material. Organic materials that form the separators 23 and 25 include engineering plastics and super engineering plastics. Examples of engineering plastics include polyamide, polyacetal, polybutylene terephthalate, polyethylene terephthalate, syndiotactic polystyrene, polycarbonate, polyamideimide, polyvinyl alcohol, polyvinylidene fluoride, modified polyphenylene ether, etc. Examples of super engineering plastics include polyphenylene sulfide, polyether ether ketone, liquid crystal polymer, polyvinylidene fluoride, polytetrafluoroethylene (PTFE), polyether nitrile, polysulfone, polyacrylate, polyetherimide, thermoplastic polyimide, etc. Examples of inorganic materials forming the separators 23 and 25 include oxides (e.g., aluminum oxide, silicon dioxide, magnesium oxide, phosphorus oxide, calcium oxide, iron oxide, titanium oxide), nitrides (e.g., boron nitride, aluminum nitride, silicon nitride, barium nitride), etc.

In the electrode group 10, the positive electrode 21, the negative electrode 22, and the separators 23 and 25 are wound around a winding axis B into a flat shape, with the separators 23 and 25 being interposed between the positive electrode active material-containing layer 21B and the negative electrode active material-containing layer 22B, respectively. At this time, for example, the positive electrode 21, the separator 23, the negative electrode 22, and the separator 25 are wound together having been stacked in this order. In the electrode group 10, the positive electrode current collecting tab 21D of the positive electrode current collecting foil 21A projects to one side in a direction along the winding axis B with respect to the negative electrode 22 and the separators 23 and 25. The negative electrode current collecting tab 22D of the negative electrode current collecting foil 22A projects to a side opposite to that on which the positive electrode current collecting tab 21D projects in the direction along the winding axis B with respect to the positive electrode 21 and the separators 23 and 25. The electrode group 10 is arranged in a state in which the winding axis B is parallel to or approximately parallel to the lateral direction of the secondary battery 1.

In an example, an electrolytic solution (not shown) is impregnated into the electrode group 10 in the accommodating space 11. As an electrolytic solution, a nonaqueous electrolytic solution is used; for example, a nonaqueous electrolytic solution prepared by dissolving an electrolyte into an organic solvent. In this case, as the electrolyte to be dissolved into the organic solvent, lithium salts, for example, lithium perchlorate (LiClO₄), lithium hexafluorophosphate (LiPF₆), lithium tetrafluoroborate (LiBF₄), lithium hexafluoride arsenate (LiAsF₆), lithium trifluoromethanesulfonate (LiCF₃SO₃), and lithium bistrifluoromethylsulfonylimide [LiN(CF₃SO₂)₂], and any mixtures thereof may be used. Examples of the organic solvent include: cyclic carbonate, such as propylene carbonate (PC), ethylene carbonate (EC), or vinylene carbonate; chain carbonate, such as diethyl carbonate (DEC), dimethyl carbonate (DMC), or methyl ethyl carbonate (MEC); cyclic ether, such as tetrahydrofuran (THF), 2-methyltetrahydrofuran (2MeTHF), and dioxolane (DOX); chain ether, such as dimethoxyethane (DME) and diethoxyethane (DEE); γ-butyrolactone (GBL), acetonitryl (AN), and sulfolane (SL). These organic solvents may be used either individually or as a mixed solvent.

In an example, a gel nonaqueous electrolyte which is a composite of a nonaqueous electrolytic solution and a polymeric material is used as a nonaqueous electrolyte instead of an electrolytic solution. In this case, the above-described electrolyte and organic solvent are used. Examples of the polymeric material include polyvinylidene fluoride (PVdF), polyacrylonitrile (PAN), and polyethylene oxide (PEO).

In an example, a solid electrolyte, such as a polymeric solid electrolyte and an inorganic solid electrolyte, is provided as a nonaqueous electrolyte instead of an electrolytic solution. In this case, the separators 23 and 25 may not be provided in the electrode group 10. In the electrode group 10, instead of the separators 23 and 25, the solid electrolyte is sandwiched between the positive electrode 21 and the negative electrode 22. Therefore, in this example, the positive electrode 21 and the negative electrode 22 are electrically insulated from each other by the solid electrolyte.

As shown in FIGS. 2 to 5, on an outer surface of the first container member 5, an inclined surface 26A is provided between the bottom wall 7 and the side wall 8A, and an inclined surface 26B is provided between the bottom wall 7 and the side wall 8B on the outer surface of the first container member 5. Each of the pair of inclined surfaces 26A and 26B is extended along the depth direction, and is continuous in the depth direction from the side wall 9A to the side wall 9B. Thus, each of the inclined surfaces 26A and 26B is extended over the same or approximately the same range as a corresponding one of the side walls 8A and 8B in the circumferential direction of the opening 12. The inclined surfaces 26A and 26B are inclined with respect to the bottom wall 7 and the side walls 8A and 8B, respectively. Each of the inclined surfaces 26A and 26B is inclined inward in the lateral direction as it nears to the bottom wall 7. Therefore, each of the inclined surfaces 26A and 26B has an obtuse angle at an intersection with the bottom wall 7, and has an obtuse angle at an intersection with the corresponding one of the side walls 8A and 8B.

A pair of terminals 27A and 27B are attached to the outer surface of the first container member 5. One of the terminals 27A and 27B serves as a positive electrode terminal of the secondary battery 1, and the other of the terminals 27A and 27B serves as a negative electrode terminal of the secondary battery 1. In the present embodiment, the terminal 27A is attached to the inclined surface 26A in a state of exposure to the outside, and the terminal 27B is attached to the inclined surface 26B in a state of exposure to the outside. Therefore, each of the terminals 27A and 27B is provided in a range in which the corresponding one of the side walls 8A and 8B is extended in the circumferential direction of the opening 12. In the example of FIG. 2, etc., the terminal 27A is arranged at a central or approximately central position of the inclined surface 26A in the depth direction, and the terminal 27B is arranged at a central or approximately central position of the inclined surface 26B in the depth direction. Each of the terminals 27A and 27B is made of a conductive material, and for example, is made of any one of aluminum, copper, stainless steel, etc.

The terminal 27A projects slightly outward with respect to the side wall 8A. However, in the present embodiment, the flange 13 and the second container member 6 project outward in the lateral direction with respect to the terminal 27A. Similarly, the terminal 27B projects slightly outward with respect to the side wall 8B. However, in the present embodiment, the flange 13 and the second container member 6 project outward in the lateral direction with respect to the terminal 27B.

A pair of insulating members 28A and 28B are provided on the outer surface of the first container member 5. The insulating member 28A is arranged on an outer surface of the side wall 8A and the inclined surface 26A, and the insulating member 28B is arranged on an outer surface of the side wall 8B and the inclined surface 26B. The insulating member 28A is interposed between the inclined surface 26A and the terminal 27A, and electrically insulates the terminal 27A from the container 3. The insulating member 28B is interposed between the inclined surface 26B and the terminal 27B, and electrically insulates the terminal 27B from the container 3. The terminal 27A is arranged on a side (inner side) close to the central position of the inclined surface 26A with respect to both outer edges of the insulating member 28A in the depth direction. The terminal 27B is arranged on a side (inner side) close to the central position of the inclined surface 26B with respect to both outer edges of the insulating member 28B in the depth direction. The terminal 27A projects slightly outward from an outer surface of the insulating member 28A, or is flush or approximately flush with the outer surface of the insulating member 28A. The terminal 27B projects slightly outward from an outer surface of the insulating member 28B, or is flush or approximately flush with the outer surface of the insulating member 28B.

The positive electrode current collecting tab 21D of the electrode group 10 is bundled by welding such as ultrasonic welding. The bundle of the positive electrode current collecting tab 21D is electrically connected to a corresponding one (positive electrode terminal) of the terminals 27A and 27B via one or more positive electrode leads including a positive electrode backup lead 31A, a positive electrode terminal lead 32A, etc. At this time, connections between the positive electrode current collecting tab 21D and the positive electrode lead, between the positive electrode leads, and between the positive electrode lead and the positive electrode terminal are performed by welding such as ultrasonic welding. Here, the positive electrode lead is made of a conductive metal. The positive electrode current collecting tab 21D and the positive electrode leads are electrically insulated from the container 3 by an insulating member (not shown), etc.

Similarly, the negative electrode current collecting tab 22D of the electrode group 10 is bundled by welding such as ultrasonic welding. The bundle of the negative electrode current collecting tab 22D is electrically connected to a corresponding one (negative electrode terminal) of the terminals 27A and 27B via one or more negative electrode leads including a negative electrode backup lead 31B, a negative electrode terminal lead 32B, etc. At this time, connections between the negative electrode current collecting tab 22D and the negative electrode lead, between the negative electrode leads, and between the negative electrode lead and the negative electrode terminal are performed by welding such as ultrasonic welding. Here, the negative electrode lead is made of a conductive metal. The negative electrode current collecting tab 22D and the negative electrode leads are electrically insulated from the container 3 by an insulating member (not shown), etc.

As shown in FIG. 4, etc., a welding part 35, which hermetically welds the flange 13 and the second container member 6, is formed in the battery body 2. The welding part 35 is provided on an outer side with respect to the opening edge 15 of the opening 12, i.e., on a side away from the opening 12 in a direction parallel to the opening surface of the opening 12. Therefore, in the flange 13 and the second container member 6, the welding part 35 is provided at a portion protruding outward from the side walls 8A, 8B, 9A, and 9B (opening edge 15). The welding part 35 is extended along the opening edge 15, and formed continuously over the entire perimeter in the circumferential direction of the opening 12. Thus, the flange 13 and the second container member 6 are hermetically welded to each other over the entire perimeter in the circumferential direction of the opening 12. Since the flange 13 and the second container member 6 are hermetically welded at the welding part 35 as described above, the accommodating space 11 is sealed and closed off.

At the welding part 35, for example, the flange 13 and the second container member 6 are welded by resistance seam welding. Resistance seam welding allows for costs to be suppressed, and obtention of a high degree of airtightness between the flange 13 and the second container member 6 as compared with laser welding, etc. In FIG. 4, the welding part 35 is indicated by a broken line.

FIG. 7 shows the container 3 and the attachment member 50, and also shows the attachment member 50 in a cross section perpendicular to or approximately perpendicular to the lateral direction. As shown in FIGS. 1, 5, and 7, the attachment member 50 is formed in an approximate plate shape, and is attached to the first container member 5 of the container 3. The attachment member 50 has an outer edge E. The outer edge E has a pair of side parts E1 and E2 along the lateral direction of the secondary battery 1. In the present embodiment, the side part E1 is provided over the entire or approximately entire range in which the side wall 9A is extended in the circumferential direction of the opening 12. The side part E2 is provided over the entire or approximately entire range in which the side wall 9B is extended in the circumferential direction of the opening 12.

The attachment member 50 includes a base 51 and side plate parts 52A and 52B. The base 51 abuts on the outer surface of the bottom wall 7. In a state in which the attachment member 50 is attached to the first container member 5, the base 51 is extended in parallel or approximately in parallel to the bottom wall 7, and is extended in parallel or approximately in parallel to the depth direction and the lateral direction of the secondary battery 1. Thus, in the base 51, a thickness direction of the attachment member 50 is parallel or approximately parallel to the thickness direction of the secondary battery 1. In the present embodiment, the base 51 is in surface contact with the entire or approximately the entire outer surface of the bottom wall 7.

The base 51 is formed in a rectangular, or approximately rectangular, plate shape. The base 51 has a pair of edges (short edges) 53A and 53B along the depth direction of the secondary battery 1, and a pair of edges (long edges) 55A and 55B along the lateral direction of the secondary battery 1. The edges 53A and 53B of the base 51 form a part of the outer edge E of the attachment member 50, and form a part of a portion other than the side parts E1 and E2 in the outer edge E. Further, the base 51 projects outward with respect to each of the side walls 9A and 9B. For this reason, the edge 55A of the base 51 is located on an outer side in the depth direction with respect to the side wall 9A. The edge 55B of the base 51 is located on an outer side in the depth direction with respect to the side wall 9B.

Each of the side plate parts 52A and 52B is formed in a rectangular, or approximately rectangular, plate shape. The side plate part 52A is extended from the edge 55A or its vicinity of the base 51 to the side on which the flange 13 is located. The side plate part 52B is extended from the edge 55B or its vicinity of the base 51 to the side on which the flange 13 is located. That is, each of the side plate parts 52A and 52B projects toward the side on which the flange 13 is located with respect to the base 51. Therefore, the attachment member 50 bends either at or near the edge 55A of the base 51, and either at or near the edge 55B. In a state in which the attachment member 50 is attached to the first container member 5, the side plate parts 52A and 52B are extended in parallel to or approximately in parallel to the side walls (second side walls) 9A and 9B, respectively, and extended in parallel to or approximately in parallel to the lateral direction and the thickness direction of the secondary battery 1. Thus, in each of the side plate parts 52A and 52B, the thickness direction of the attachment member 50 is parallel to or approximately parallel to the depth direction of the secondary battery 1.

The side plate part 52A is provided over the entire or approximately entire range in which the side wall 9A is extended in the circumferential direction of the opening 12. The side plate part 52B is provided over the entire or approximately entire range in which the side wall 9B is extended in the circumferential direction of the opening 12. Therefore, in the present embodiment, the side plate part of the attachment member 50, including the side plate parts 52A and 52B, is provided only in ranges in which the side walls (second side walls) 9A and 9B are extended, in the circumferential direction of the opening 12. For this reason, the side plate parts 52A and 52B are not provided in ranges in which the side walls (first side walls) 8A and 8B are extended and ranges in which the terminals 27A and 27B are located, in the circumferential direction of the opening 12. That is, in the present embodiment, the side plate part of the attachment member 50 including the side plate parts 52A and 52B is provided over a partial range in the circumferential direction of the opening 12.

The side plate part 52A faces the side wall 9A from an outer side in the depth direction, and the side plate part 52B faces the side wall 9B from an outer side in the depth direction. The side plate part 52A faces an outer surface of the side wall 9A with a gap 56A between the side plate part 52A and the side wall 9A. Thus, in a range in which the side wall 9A is extended in the circumferential direction of the opening 12, the gap 56A is formed adjacent to an inner side of the side plate part 52A, and the gap 56A is formed along the lateral direction of the secondary battery 1. The side plate part 52B faces an outer surface of the side wall 9B, with a gap 56B between the side plate part 52B and the side wall 9B. Thus, in a range in which the side wall 9B is extended in the circumferential direction of the opening 12, the gap 56B is formed adjacent to an inner side of the side plate part 52B, and the gap 56B is formed along the lateral direction of the secondary battery 1.

In the side plate part 52A, an end on a side opposite to a side on which the base 51 is located is a projecting end 57A from the base 51. Then, in the side plate part 52B, an end on a side opposite to the side on which the base 51 is located is a projecting end 57B from the base 51. Each of the projecting ends 57A and 57B is extended along the lateral direction of the secondary battery 1. In the present embodiment, each of the projecting ends 57A and 57B is formed of the outer edge E of the attachment member 50. The projecting end 57A is the side part E1 of the attachment member 50, and the projecting end 57B is the side part E2 of the attachment member 50.

In the present embodiment, each of the side plate parts 52A and 52B is extended beyond the flange 13 and the second container member 6 toward the side opposite to the side on which the base 51 is located. Thus, each of the projecting ends 57A and 57B is located on the side opposite to the side on which the base 51 is located with respect to the flange 13 and the second container member 6. However, a projecting dimension of each of the side plate parts 52A and 52B from the second container member 6 is minute, and about 2 mm to 5 mm. Therefore, even if each of the side plate parts 52A and 52B is extended beyond the second container member 6, the dimension of the secondary battery 1 in the thickness direction will not become excessively large.

In addition, in the present embodiment, each of the side plate parts 52A and 52B is extended through an outer side with respect to the outer peripheral end (outer edge) of each of the flange 13 and the second container member 6. However, each of a distance D1 of the gap 56A between the side wall 9A and the side plate part 52A and a distance D2 of the gap 56B between the side wall 9B and the side plate part 52B is only slightly larger than the projecting dimension of the flange 13 and the second container member 6 from the opening edge 15. For example, each of the distances D1 and D2 is larger than the projecting dimension of the flange 13 from the opening edge 15, and is about 10 mm or less. However, in a case where a later-described refrigerant is not liquid but air, each of the distances D1 and D2 is about 5 mm to 10 mm. Therefore, even if each of the side plate parts 52A and 52B is provided on the outer side with respect to the outer peripheral end of each of the flange 13 and the second container member 6, the dimension of the secondary battery 1 in the depth direction will not become excessively large.

In an embodiment, each of the projecting ends 57A and 57B may be located on the side where the base 51 is located with respect to the flange 13 and the second container member 6. In this case, each of the side plate parts 52A and 52B is extended to the vicinity of the flange 13 in the thickness direction of the secondary battery 1, and each of the projecting ends 57A and 57B is located in the vicinity of the flange 13. Further, in this case, each of the side plate parts 52A and 52B need not be located on the outer side with respect to the outer peripheral end (outer edge) of each of the flange 13 and the second container member 6. For example, each of the above-described distances D1 and D2 may be the same as or approximately the same as the projecting dimension of the flange 13 and the second container member 6. In addition, each of the side plate parts 52A and 52B may be located on an inner side with respect to the outer peripheral end of each of the flange 13 and the second container member 6.

However, even if each of the side plate parts 52A and 52B is located on the inner side with respect to the outer peripheral end of the flange 13, each of the distances D1 and D2 is only slightly smaller than the projecting dimension of the flange 13 and the second container member 6 from the opening edge 15. Thus, a gap (a corresponding one of 56A and 56B) of a certain size is formed between each of the side plate parts 52A and 52B and a corresponding one of the side walls 9A and 9B. In the present example in which each of the projecting ends 57A and 57B is located on the side where the base 51 is located with respect to the flange 13, for example, each of the distances D1 and D2 is about 2 mm to 10 mm. However, in a case where a later-described refrigerant is not liquid but air, each of the distances D1 and D2 is about 5 mm to 10 mm.

In the present embodiment, the entire attachment member 50 is made of an insulating resin, etc., and the attachment member 50 is formed of one insulating layer 61. The insulating layer 61 is extended continuously from the central position of the base 51 to the outer edge E of the attachment member 50. Thus, the insulating layer 61 is extended continuously from the base 51 to the projecting ends 57A and 57B (side parts E1 and E2) of the side plate parts 52A and 52B. In the present embodiment, since the entire attachment member 50 is formed of the insulating layer 61, entire surfaces of the base 51 and the side plate parts 52A and 52B facing a side opposite to a side on which the first container member 5 is located are formed of the insulating layer 61. Examples of the resin forming the insulating layer 61 include polypropylene and polyethylene. The thickness direction of the insulating layer 61 coincides with or approximately coincides with the thickness direction of the attachment member 50.

In the present embodiment, a layer thickness (thickness) of the insulating layer 61 is about 0.5 mm to 1.2 mm. Thus, the thickness of the attachment member 50 is minute. Therefore, even if the attachment member 50 is provided, neither the dimension of the secondary battery 1 in the thickness direction nor the dimension of the secondary battery 1 in the depth direction will become excessively large.

In each of the gaps 56A and 56B, a passage for a refrigerant to cool the secondary battery 1 is defined. Examples of the refrigerant include a gas such as air and a liquid such as water. In one example, air is used as the refrigerant, and the gaps 56A and 56B themselves serve as passages for the refrigerant. In another example, water is used as the refrigerant, and a tube (not shown) is extended through each of the gaps 56A and 56B. A passage for the refrigerant is defined inside the tube.

When the secondary battery 1 is used, heat may be generated in the battery body 2 due to charging and discharging, etc., and the temperature of the secondary battery 1 may rise. In the secondary battery 1 of the present embodiment, a portion adjacent to the gap 56A between the side wall 9A and the side plate part 52A, etc. is cooled by the refrigerant. A portion adjacent to the gap 56B between the side wall 9B and the side plate part 52B, etc. is cooled by the refrigerant. In the present embodiment, the heat generated in the battery body 2 is transferred from the bottom wall 7 of the first container member 5 to the base 51 of the attachment member 50. In the attachment member 50, the heat is transferred from the base 51 to each of the side plate parts 52A and 52B. Therefore, the heat generated in the battery body 2 is effectively transferred to the side plate parts 52A and 52B which are cooled by the refrigerant. Thus, in a state where the heat is generated in the secondary battery 1 (battery body 2), the secondary battery 1 is effectively cooled.

Further, in the present embodiment, the attachment member 50 is attached to the first container member 5 so that a passage for the refrigerant can be formed in the gap 56A between the side wall 9A and the side plate part 52A, and also in the gap 56B between the side wall 9B and the side plate part 52B. As described above, even if the attachment member 50 is provided, neither the dimension of the secondary battery 1 in the thickness direction nor the dimension of the secondary battery 1 in the depth direction will not become excessively large. Therefore, even if the refrigerant passages are formed in the gaps 56A and 56B, the volume of the entire secondary battery 1 will not be significantly increased. As a result, even if the refrigerant passages are formed in the gaps 56A and 56B, high energy density of the secondary battery 1 is ensured.

### (Modifications)

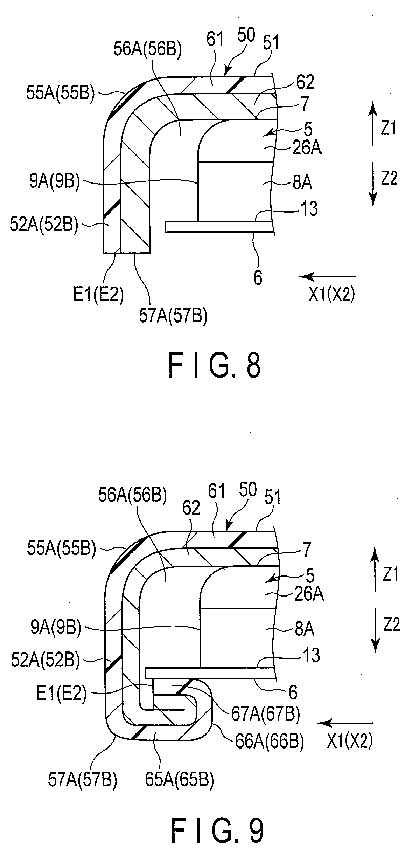

Next, modifications of the secondary battery 1 will be described. In the first modification shown in FIG. 8, the attachment member 50 includes a metal layer 62 in addition to the above-described insulating layer 61, and the attachment member 50 is formed in a two-layered structure. In the present modification, the outer edge E of the attachment member 50 is formed of an outer edge of the insulating layer 61 and an outer edge of the metal layer 62. The metal layer 62 is stacked adjacent to the insulating layer 61 in the thickness direction of the attachment member 50. Thus, the thickness direction of each of the insulating layer 61 and the metal layer 62 coincides with or approximately coincides with the thickness direction of the attachment member 50. The metal layer 62 is made of a material having higher thermal conductivity than the insulating layer 61, and preferably made of a metal having higher thermal conductivity than the container 3. Examples of metal forming the metal layer 62 include steel and aluminum.

In the present modification, the insulating layer 61 and the metal layer 62 are extended continuously from the central position of the base 51 to the outer edge E of the attachment member 50. Also in the present modification, each of the projecting end 57A of the side plate part 52A and the projecting end 57B of the side plate part 52B is formed of the outer edge E (a corresponding one of the side parts E1 and E2) of the attachment member 50. Therefore, each of the projecting ends 57A and 57B is formed of the outer edge of the insulating layer 61 and the outer edge of the metal layer 62. In the present modification, in the base 51 and the side plate parts 52A and 52B, the entire or approximately entire surfaces facing the side opposite to the side on which the first container member 5 is located are formed of the insulating layer 61. In addition, in the base 51 and the side plate parts 52A and 52B, the entire or approximately entire surfaces facing the side on which the first container member 5 is located are formed of the metal layer 62.

In the base 51, the metal layer 62 is adjacent to the insulating layer 61 on a side close to the bottom wall 7. In the base 51, the metal layer 62 abuts on the outer surface of the bottom wall 7 in a surface contact state, and the insulating layer 61 does not contact the bottom wall 7. In the side plate part 52A, the metal layer 62 is adjacent to a side close to the side wall 8A with respect to the insulating layer 61. Thus, in the side plate part 52A, the metal layer 62 is provided adjacent to the gap 56A. In the side plate part 52B, the metal layer 62 is adjacent to a side close to the side wall 8B with respect to the insulating layer 61. Thus, in the side plate part 52B, the metal layer 62 is provided adjacent to the gap 56B.

In the present modification, the layer thickness (thickness) of the insulating layer 61 is about 0.05 mm to 0.3 mm, and the layer thickness of the metal layer 62 is about 0.5 mm to 0.8 mm. Thus, in the present modification, the thickness of the attachment member 50 is about 0.6 mm to 1.2 mm, and is minute. Accordingly, even if the attachment member 50 is provided, neither the dimension of the secondary battery 1 in the thickness direction nor the dimension of the secondary battery 1 in the depth direction will become excessively large. Therefore, also in the present modification, the volume of the entire secondary battery 1 will not be significantly increased, and high energy density of the secondary battery 1 is ensured.

In addition, in the present modification, the metal layer 62 having high thermal conductivity is provided in the attachment member 50, and the metal layer 62 is continuously extended from the base 51 to the projecting ends 57A and 57B of the side plate parts 52A and 52B. In the base 51, the metal layer 62 abuts on the bottom wall 7. Thus, the heat generated in the battery body 2 is easily transferred to each of the side plate parts 52A and 52B, especially through the metal layer 62. Since the heat is easily transferred to the side plate parts 52A and 52B, the secondary battery 1 is more effectively cooled.

Also in a second modification shown in FIG. 9, the attachment member 50 is formed of the insulating layer 61 and the metal layer 62. Also in the present modification, the insulating layer 61 and the metal layer 62 are extended continuously from the central position of the base 51 to the outer edge E of the attachment member 50, and the outer edge E of the attachment member 50 is formed of the outer edge of the insulating layer 61 and the outer edge of the metal layer 62.

In the present modification, the attachment member 50 includes inward extending parts 65A and 65B, folded parts 66A and 66B, and end piece parts 67A and 67B, in addition to the above-described base 51 and side plate parts 52A and 52B. Each of the inward extending parts 65A and 65B, folded parts 66A and 66B, and end piece parts 67A and 67B is extended along the lateral direction of the secondary battery 1. The inward extending part 65A, folded part 66A, and end piece part 67A are provided over the entire or approximately entire range in which the side wall 9A is extended in the circumferential direction of the opening. In addition, the inward extending part 65B, folded part 66B, and end piece part 67B are provided over the entire or approximately entire range in which the side wall 9B is extended in the circumferential direction of the opening.

Each of the inward extending parts 65A and 65B is extended from a corresponding one of the side plate parts 52A and 52B toward an inner side. In each of the inward extending parts 65A and 65B, the insulating layer 61 and the metal layer 62 are extended from a corresponding one of the projecting ends 57A and 57B toward the inner side. That is, in each of the inward extending parts 65A and 65B, the insulating layer 61 and the metal layer 62 are extended from the corresponding one of the projecting ends 57A and 57B on a side close to the opening 12 in the direction parallel to the opening surface of the opening 12. Thus, in the present modification, each of the projecting ends 57A and 57B is formed of a portion different from the outer edge E of the attachment member 50. That is, the projecting end 57A is formed of a portion different from the side part E1, and the projecting end 57B is formed of a portion different from the side part E2.

Each of the inward extending parts 65A and 65B is provided away from the base 51 toward the side on which the flange 13 is located. In the present modification, each of the projecting ends 57A and 57B is located on the side opposite to the side on which the base 51 is located with respect to the flange 13 and the second container member 6. Thus, each of the inward extending parts 65A and 65B is located on the side opposite to the side on which the base 51 is located with respect to the flange 13 and the second container member 6. The insulating layer 61 and the metal layer 62 are extended continuously from each of the projecting ends 57A and 57B to an inner end (inner peripheral end) of a corresponding one of the inward extending parts 65A and 65B. In each of the inward extending parts 65A and 65B, the metal layer 62 is adjacent to the side on which the base 51 is located, with respect to the insulating layer 61.

Each of the folded parts 66A and 66B is provided at an inner end (inner peripheral end) of the corresponding one of the inward extending parts 65A and 65B. In each of the folded parts 66A and 66B, the insulating layer 61 and the metal layer 62 are folded with respect to the corresponding one of the inward extending parts 65A and 65B. Then, in each of the folded parts 66A and 66B, a surface facing an inner side (inner peripheral side) is formed of the insulating layer 61. That is, at the inner end of each of the inward extending parts 65A and 65B, a surface facing the side near to the opening 12 in the direction parallel to the opening surface of the opening 12 is formed of the insulating layer 61.

Each of the end piece parts 67A and 67B is extended from the corresponding one of the folded parts 66A and 66B to the outer edge E of the attachment member 50. In the present embodiment, the end piece part 67A is extended from the folded part 66A to the side part E1 of the outer edge E, and the end piece part 67B is extended from the folded part 66B to the side part E2 of the outer edge E. In each of the end piece parts 67A and 67B, the insulating layer 61 and the metal layer 62 are continuously extended between the corresponding one of the folded parts 66A and 66B and the outer edge E of the attachment member 50.

Each of the end piece parts 67A and 67B is provided on the side where the bottom wall 7 is located with respect to the corresponding one of the inward extending parts 65A and 65B. In the present modification, each of the end piece parts 67A and 67B is adjacent to the side on which the bottom wall 7 is located with respect to the corresponding one of the inward extending parts 65A and 65B. Therefore, each of the end piece parts 67A and 67B is located between the corresponding one of the inward extending parts 65A and 65B and the bottom wall 7. The end piece part 67A is located between the folded part 66A and the side plate part 52A, and the end piece part 67B is located between the folded part 66B and the side plate part 52B.

In the present modification, each of the end piece parts 67A and 67B is extended outward from the corresponding one of the folded parts 66A and 66B. That is, each of the end piece parts 67A and 67B is extended from the corresponding one of the folded parts 66A and 66B to the side away from the opening 12 in the direction parallel to the opening surface of the opening 12. In each of the end piece parts 67A and 67B, the insulating layer 61 is adjacent to the side on which the base 51 is located with respect to the metal layer 62.

In addition, in the present modification, each of the folded parts 66A and 66B and the end piece parts 67A and 67B is located on the side opposite to the side on which the base 51 is located with respect to the flange 13 and the second container member 6. Thus, the end piece part 67A is located between the inward extending part 65A and the second container member 6 in the thickness direction of the secondary battery 1. The end piece part 67B is located between the inward extending part 65B and the second container member 6 in the thickness direction of the secondary battery 1.

With the above-described configuration, in the present modification, contact of the outer edge E (side parts E1 and E2) of the attachment member 50 with the terminals 27A and 27B is effectively prevented. Accordingly, the container 3 is effectively prevented from being electrically connected to the terminals 27A and 27B via the metal layer 62 of the attachment member 50, and electrical insulation between the container 3 and the terminals 27A and 27B is more reliably ensured.

In another modification, the end piece parts 67A and 67B may be formed in a roll shape. In this case, the end piece part 67A is wound in a state of being located on the inner peripheral side of the roll as approaching the side part E1 of the outer edge E from the folded part 66A. Similarly, the end piece part 67B is wound in a state of being located on the inner peripheral side of the roll as approaching the side part E2 of the outer edge E from the folded part 66B.

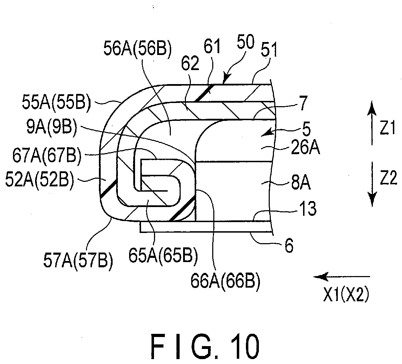

Also in a third modification shown in FIG. 10, the inward extending parts 65A and 65B, folded parts 66A and 66B, and end piece parts 67A and 67B are provided in the attachment member 50. However, in the present modification, each of the projecting ends 57A and 57B is located on the side where the base 51 is located with respect to the flange 13 and the second container member 6. Each of the inward extending parts 65A and 65B, folded parts 66A and 66B, and end piece parts 67A and 67B is provided on the side where the base 51 is located with respect to the flange 13 and the second container member 6.

However, also in the present modification, similarly to the second modification, each of the inward extending parts 65A and 65B, folded parts 66A and 66B, and end piece parts 67A and 67B is provided away from the base 51 toward the side on which the flange 13 is located. Each of the end piece parts 67A and 67B is provided on the side where the bottom wall 7 is located with respect to the corresponding one of the inward extending parts 65A and 65B, and each of the end piece parts 67A and 67B is adjacent to the side on which the bottom wall 7 is located with respect to the corresponding one of the inward extending parts 65A and 65B. Thus, each of the end piece parts 67A and 67B is located between the corresponding one of the inward extending parts 65A and 65B and the base 51 (bottom wall 7). Each of the gaps 56A and 56B is formed between the corresponding one of the end piece parts 67A and 67B and the base 51. Thus, the present modification also achieves the same operation and advantageous effect as those of the second modification.

In a modification, side plate parts similar to the above-described side plate parts 52A and 52B may be provided in ranges in which the side walls (first side walls) 8A and 8B are extended in the circumferential direction of the opening 12. In this case, gaps similar to the above-described gaps 56A and 56B are also formed in the ranges in which the side walls (first side walls) 8A and 8B are extended in the circumferential direction of the opening 12, and passages for the refrigerant are defined in the gaps. In this case, inward extending parts similar to the above-described inward extending parts 65A and 65B, folded parts similar to the above-described folded parts 66A and 66B, and end piece parts similar to the above-described end piece parts 67A and 67B may be provided over the entire or approximately entire ranges in which the side plate parts are extended in the circumferential direction of the opening 12.

In addition, as long as each of the terminals 27A and 27B is exposed to the outside of the attachment member 50, side plate parts similar to the above-described side plate parts 52A and 52B may be provided in ranges in which the terminals 27A and 27B are provided in the circumferential direction of the opening 12. As long as each of the terminals 27A and 27B is exposed to the outside of the attachment member 50, side plate parts similar to the above-described side plate parts 52A and 52B may be provided over the entire perimeter of the opening 12 in the circumferential direction. In these cases, gaps similar to the above-described gaps 56A and 56B are also formed in the ranges in which the terminals 27A and 27B are provided in the circumferential direction of the opening 12, and passages for the refrigerant are defined in the gaps. In addition, in these cases, inward extending parts similar to the above-described inward extending parts 65A and 65B, folded parts similar to the above-described folded parts 66A and 66B, and end piece parts similar to the above-described end piece parts 67A and 67B may be provided over the entire or approximately entire ranges in which the side plate parts are extended in the circumferential direction of the opening 12.

In a modification, a plurality of electrode groups may be accommodated in the accommodating space 11. In another modification, the second container member 6 is formed in a tubular shape with a bottom similar to the first container member 5, not in the plate shape. In this case, the second container member 6 also includes a bottom wall, side walls, and a flange. Then, the flange 13 of the first container member 5 and the flange of the second container member 6 are hermetically welded to each other by the welding part 35. Also in the secondary battery 1 according to the present modification, the flange 13 and the second container member 6 are hermetically welded, by the welding part 35, over the entire perimeter in the circumferential direction of the opening 12. The accommodating space 11 in which the electrode group 10 is accommodated is sealed off from the outside of the container 3.

### (Application Example of Secondary Battery)

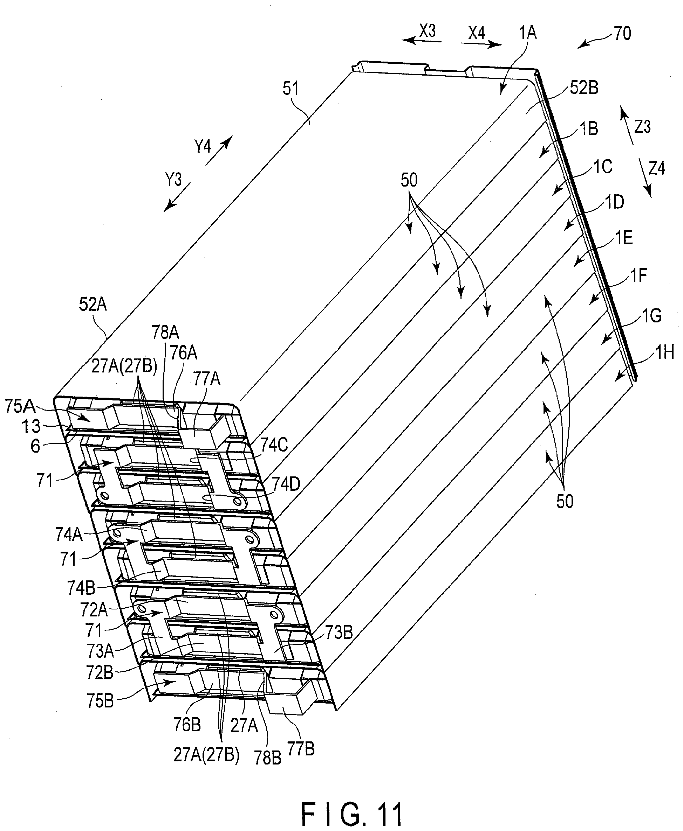

Next, an application example of the secondary battery 1 of the above-described embodiment, etc. will be described. FIG. 11 shows a battery pack 70 in which a plurality of above-described secondary batteries 1 are provided. In an example of FIG. 11, the battery pack 70 includes eight secondary batteries 1A to 1H. In the battery pack 70, the secondary batteries 1A to 1H are stacked along a stacking direction (direction indicated by arrows Z3 and Z4). The stacking direction of the secondary batteries 1A to 1H is an arrangement direction in which the secondary batteries 1A to 1H are arranged. Here, in the battery pack 70, a first intersecting direction (direction indicated by arrows X3 and X4) intersecting with the stacking direction, and a second intersecting direction (direction indicated by arrows Y3 and Y4) intersecting with the stacking direction and the first intersecting direction, are defined. In the present embodiment, the first intersecting direction is perpendicular to or approximately perpendicular to the stacking direction, and the second intersecting direction is perpendicular to or approximately perpendicular to the stacking direction and perpendicular to or approximately perpendicular to the first intersecting direction.

In the battery pack 70, the secondary batteries 1A to 1H are stacked in a state in which the thickness direction is parallel to or approximately parallel to the stacking direction. Then, each of the secondary batteries 1A to 1H is arranged in a state in which the depth direction is parallel to or approximately parallel to the first intersecting direction and the lateral direction is parallel to or approximately parallel to the second intersecting direction.

Here, among the secondary batteries 1A to 1H, two secondary batteries arranged (stacked) adjacent to each other are referred to as "secondary batteries 1α and 1β". In the example of FIG. 11, the secondary battery (first secondary battery) 1α is any one of the secondary batteries 1A to 1G, and the secondary battery (second secondary battery) 1β is a corresponding one of the secondary batteries 1B to 1H. In the battery pack 70, the second container member 6 of the secondary battery 1α faces the bottom wall 7 of the secondary battery 1β, with the base 51 of the attachment member 50 of the secondary battery 1β interposed therebetween. Thus, the attachment member 50 of the secondary battery 1β prevents the first container member 5 of the secondary battery 1β from coming into contact with the second container member 6 of the secondary battery 1α. Thereby, the containers 3 of the secondary batteries 1α and 1β are prevented from coming into contact with each other, and thus effectively prevented from being electrically connected to each other.

In the battery pack 70, the adjacently arranged secondary batteries 1α and 1β are electrically connected to each other by a bus bar 71 serving as a connecting member. The bus bar 71 is made of, for example, a conductive metal. In the battery pack 70, a target terminal, which is a corresponding one of the terminals 27A and 27B of the secondary battery 1α, is connected to a target terminal, which is a corresponding one of the terminals 27A and 27B of the secondary battery 1β via the bus bar 71. The target terminal (27A or 27B) of the secondary battery 1α and the target terminal (27A or 27B) of the secondary battery 1β, connected to each other by the bus bar 71, are located on the same side with respect to a central position of the battery pack 70 in the second intersecting direction. That is, the target terminal (27A or 27B) of the secondary battery 1α and the target terminal (27A or 27B) of the secondary battery 1β are located on the same side with respect to the accommodating spaces 11 of the secondary batteries 1α and 1β in the second intersecting direction.

In actual fact, between the secondary batteries 1B and 1C, between the secondary batteries 1D and 1E, and between the secondary batteries 1F and 1G, terminals located on one side (arrow Y3 side) with respect to the central position of the battery pack 70 in the second intersecting direction are connected to each other by the bus bar 71. Between the secondary batteries 1A and 1B, between the secondary batteries 1C and 1D, between the secondary batteries 1E and 1F, and between the secondary batteries 1G and 1H, terminals located on the other side (arrow Y4 side) with respect to the central position of the battery pack 70 in the second intersecting direction are connected to each other by the bus bar 71.

In the example of FIG. 11, the secondary batteries 1α and 1β are electrically connected in series. Accordingly, one of the two target terminals connected by the bus bar 71 is a positive electrode terminal, and the other is a negative electrode terminal. In another example, the secondary batteries 1α and 1β may be electrically connected in parallel. In this case, the positive electrode terminals of the secondary batteries 1α and 1β are connected to each other by the bus bar 71 on one side with respect to the central position of the battery pack 70 in the second intersecting direction. Then, the negative electrode terminals of the secondary batteries 1α and 1β are connected to each other by the bus bar 71 on the other side with respect to the central position of the battery pack 70 in the second intersecting direction.

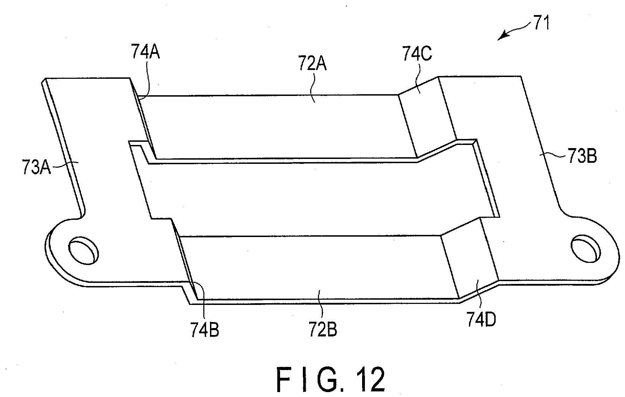

FIG. 12 is a diagram showing a configuration of the bus bar 71. As shown in FIGS. 11 and 12, the bus bar 71 includes a connector (first connector) 72A that is in contact with the target terminal (27A or 27B) of the secondary battery (first secondary battery) 1α, and a connector (second connector) 72B that is in contact with the target terminal (27A or 27B) of the secondary battery (second secondary battery) 1β. Each of the connectors (contact parts) 72A and 72B comes into surface contact with the corresponding target terminal (27A or 27B) from the outside in the second intersecting direction of the battery pack 70, and is connected to the corresponding target terminal (27A or 27B) by welding, etc. In the present application example, the connectors 72A and 72B are located on an inner side with respect to an outer peripheral end of the flange 13 of each of the secondary batteries 1α and 1β in the second intersecting direction. In addition, each of the connectors 72A and 72B is extended along the first intersecting direction, and also along the depth direction of each of the secondary batteries 1α and 1β. Each of the connectors 72A and 72B is extended outward beyond both outer ends of the corresponding target terminal (27A or 27B) in the first intersecting direction.

The bus bar 71 includes relay parts 73A and 73B that relay between the connectors 72A and 72B. Each of the relay parts 73A and 73B is extended along the stacking direction (arrangement direction) of the battery pack 70. The relay part (first relay part) 73A is arranged on one side away from the target terminal (27A or 27B), with which each of the connectors 72A and 72B comes into contact, in the first intersecting direction. The relay part (second relay part) 73B is arranged away from the target terminal (27A or 27B), with which each of the connectors 72A and 72B comes into contact, on a side opposite to the relay part 73A in the first intersecting direction. The connectors 72A and 72B and the target terminals (27A and 27B) to which the connectors 72A and 72B are respectively connected are provided between the relay parts 73A and 73B in the first intersecting direction.

In the bus bar 71, a step (first step) 74A is provided between the connector 72A and the relay part 73A, and a step (second step) 74B is provided between the connector 72B and the relay part 73A. A step (third step) 74C is provided between the connector 72A and the relay part 73B, and a step (fourth step) 74D is provided between the connector 72B and the relay part 73B. Each of the steps 74A to 74D is arranged on an outer side with respect to the target terminal (27A or 27B), with which each of the connectors 72A and 72B comes into contact, in the first intersecting direction. Due to the steps 74A and 74B, the relay part 73A is located on an outer side with respect to each of the connectors 72A and 72B in the second intersecting direction. Due to the steps 74C and 74D, the relay part 73B is located on an outer side with respect to each of the connectors 72A and 72B in the second intersecting direction. With the above-described configuration, the bus bar 71 is approximately O-shaped when viewed from the outside in the second intersecting direction.

In addition, each of the relay parts 73A and 73B is extended through a region on further outside with respect to the outer peripheral end of the flange 13 and an outer peripheral end of the second container member 6 of the secondary battery 1α in the second intersecting direction. This prevents the bus bar 71 from coming into contact with the container 3 of each of the secondary batteries 1α and 1β. Therefore, the containers 3 of the secondary batteries 1α and 1β are prevented from being electrically connected to each other via the bus bar 71.

The configuration of the bus bar 71 is not limited to the above-described configuration. In an example, the bus bar (71) may be formed of only the connectors 72A and 72B, relay part 73A, and steps 74A and 74B, and the relay part 73B and the steps 74C and 74D may not be provided in the bus bar (71). In this case, the bus bar (71) is approximately U-shaped when viewed from the outer side in the second intersecting direction.

In an example, each of the connectors (72A and 72B) may be extended from the target terminal (27A or 27B) to be brought into contact therewith toward the relay part along the stacking direction. In another example, each of the connectors (72A and 72B) may be extended outward from the target terminal (27A or 27B) to be brought into contact therewith to the relay part along the second intersecting direction. That is, the bus bar (71) may be provided with one or more relay parts that relay between the two connectors (72A and 72B). The relay parts (73A and 73B) may be extended along the stacking direction and may be extended through the region on further outside with respect to the outer peripheral end of the flange 13 and the outer peripheral end of the second container member 6 of the secondary battery 1α in the second intersecting direction. It is only necessary to prevent the bus bar 71 from coming into contact with the container 3 of each of the secondary batteries 1α and 1β.

In the secondary battery 1A on the most arrow Z3 side in the stacking direction of the battery pack 70, a bus bar 75A serving as a connecting member is connected to one of the terminals 27A and 27B. In the secondary battery 1H on the most arrow Z4 side in the stacking direction, a bus bar 75B serving as a connecting member is connected to one of the terminals 27A and 27B. Each of the bus bars 75A and 75B is made of a conductive metal in the same manner as the bus bar 71. In the secondary battery 1A, the other of the terminals 27A and 27B is connected to the secondary battery 1B via the bus bar 71. In the secondary battery 1H, the other of the terminals 27A and 27B is connected to the secondary battery 1G via the bus bar 71.

The bus bar 75A includes a connector 76A that is in contact with one of the terminals 27A and 27B of the secondary battery 1A, and the bus bar 75B includes a connector 76B that is in contact with one of the terminals 27A and 27B of the secondary battery 1H. Each of the connectors 76A and 76B is connected to the corresponding terminal (27A or 27B) by welding, etc. Each of the connectors 76A and 76B is extended along the first intersecting direction. Each of the bus bars 75A and 75B includes an external terminal (77A; 77B). One of the external terminals 77A and 77B serves as a positive electrode terminal of the battery pack 70, and the other of the external terminals 77A and 77B serves as a negative electrode terminal of the battery pack 70. The external terminal 77A is arranged on one side away from the terminal (27A or 27B), with which the connector 76A comes into contact, in the first intersecting direction. The external terminal 77B is arranged on one side away from the terminal (27A or 27B), with which the connector 76B comes into contact, in the first intersecting direction.

In the bus bar 75A, a step 78A is provided between the connector 76A and the external terminal 77A, and in the bus bar 75B, a step 78B is provided between the connector 76B and the external terminal 77B. By the step 78A, the external terminal 77A is located on an outer side with respect to the connector 76A in the second intersecting direction, and is located on further outside with respect to the outer peripheral end of the flange 13 and the outer peripheral end of the second container member 6 of the secondary battery 1A in the second intersecting direction. By the step 78B, the external terminal 77B is located on an outer side with respect to the connector 76B in the second intersecting direction, and is located on further outside with respect to the outer peripheral end of the flange 13 and the outer peripheral end of the second container member 6 of the secondary battery 1H in the second intersecting direction.

In the battery pack 70 formed as described above, as each of the stacked second batteries (1A to 1H), the secondary battery 1 of the above-described embodiment, etc. can be used. However, in a case where the metal layer 62 is provided in the attachment member 50, as in the secondary battery 1 of the first to third modifications, it is more preferable that the secondary battery 1 provided with the inward extending parts 65A and 65B, folded parts 66A and 66B, and end piece parts 67A and 67B as in the second and third modifications be used as the stacked secondary batteries (1A to 1H). This effectively prevents the outer edge E (side parts E1 and E2) of the attachment member 50 of the secondary battery 1α from coming into contact with the container 3 of the secondary battery 1β. Therefore, the container 3 of the secondary battery 1α is effectively prevented from being electrically connected to the container 3 of the secondary battery 1β via the metal layer 62 of the attachment member 50 of the secondary battery 1α, and electrical insulation between the containers 3 of the secondary batteries 1α and 1β is more reliably ensured.

In addition, among the second and third modifications, it is more preferable that the secondary battery 1 of the second modification is used as the secondary batteries (1A to 1H) stacked in the battery pack 70. In the secondary battery 1 of the second modification, as described above, each of the inward extending parts 65A and 65B, folded parts 66A and 66B, and end piece parts 67A and 67B is provided on the side opposite to the side on which the base 51 is located with respect to the flange 13 and the second container member 6. Thus, the secondary battery 1β can be easily fitted between the folded parts 66A and 66B of the secondary battery 1α in the first intersecting direction. As a result, the working efficiency at the time of assembling the battery pack 70 is improved.

According to the secondary battery of at least one of these embodiments or examples, an attachment member attached to a first container member includes a base abutting on an outer surface of a bottom wall, and a side plate part extended from the base toward a side on which a flange is located. The side plate part faces an outer surface of a side wall of the first container member with a gap between the side plate part and the side wall, and a passage for the refrigerant is defined in the gap between the side plate part and the side wall. Therefore, it is possible to provide a secondary battery that is effectively cooled.

While certain embodiments have been described, these embodiments have been presented by way of example only, and are not intended to limit the scope of the inventions.

## Claims

1. A secondary battery (1) comprising:
a first container member (5) including a bottom wall (7) and side walls (8A,8B,9A,9B), and made of a metal, wherein an accommodating space (11) is defined by the bottom wall (7)and the side walls (8A,8B,9A,9B), the accommodating space (11) has an opening (12) on a side opposite to the bottom wall (7), and the first container member (5) includes a flange (13) projecting outward from an opening edge (15) of the opening (12) with respect to the side walls (8A,8B,9A,9B);
an electrode group (10) including a positive electrode (21) and a negative electrode (22), and accommodated in the accommodating space (11);
a second container member (6) made of a metal, and arranged to face the flange (13) in a state of closing the opening (12) of the accommodating space (11), the second container member (6) being welded to the flange (13); and
an attachment member (50) attached to the first container member (5),
wherein the attachment member (50) includes:
a base (51) abutting on an outer surface of the bottom wall (7); and
a side plate part (52A, 52B) extended from the base (51) toward a side on which the flange (13) is located, and provided over at least a partial range in a circumferential direction of the opening (12),
wherein the side plate part (52A, 52B) faces an outer surface of the side wall (9A, 9B) of the first container member (5) with a gap (56A, 56B) between the side plate part (52A, 52B) and the side wall (9A, 9B),
wherein a passage for a refrigerant is defined in the gap (56A, 56B) between the side plate part (52A, 52B) and the side wall (9A, 9B),
**characterized in that**
the attachment member (50) includes an insulating layer (61),
wherein a surface of the base (51) and the side plate part (52A, 52B) that faces a side opposite to a side on which the first container member (5) is located is formed of the insulating layer (61),
wherein the attachment member (50) includes a metal layer (62) stacked adjacent to the insulating layer (61) in the base (51) and the side plate part (52A, 52B) and having a higher thermal conductivity than that of the insulating layer (61), and
wherein the metal layer (62) abuts on the outer surface of the bottom wall (7) in the attachment member (50), and
wherein the attachment member (50) includes:
an inward extending part (65A, 65B) in which the insulating layer (61) and the metal layer (62) are extended inwardly from the side plate part (52A, 52B) at a position away from the base (51) toward a side on which the flange (13) is located, and in which the metal layer (62) is adjacent to a side on which the base (51) is located with respect to the insulating layer (61); and
a folded part (66A, 66B) provided at an inner end of the inward extending part (65A, 65B), wherein the insulating layer (61) and the metal layer (62) are folded in a state where a surface facing inward is formed of the insulating layer (61).

2. The secondary battery (1) according to claim 1, wherein a thickness of the attachment member (50) is from 0.5 mm to 1.2 mm.

3. The secondary battery (1) according to claim 1 or 2, wherein
the attachment member (50) further includes an end piece part (67A, 67B) in which the insulating layer (61) and the metal layer (51) are extended between the folded part (66A, 66B) and an outer edge (E) of the attachment member (50), and
the end piece part (67A, 67B) is located between the folded part (66A, 66B) and the side plate part (52A, 52B) and between the inward extending part (65A, 65B) and the bottom wall (7).

4. The secondary battery (1) according to any one of claims 1 to 3, wherein
a thickness of the insulating layer (61) is from 0.05 mm to 0.3 mm, and
a thickness of the metal layer (62) is from 0.5 mm to 0.8 mm.

5. The secondary battery (1) according to any one of claims 1 to 4,
wherein the side wall (8A, 8B, 9A, 9B) of the first container member (5) includes:
a pair of first side walls (8A, 8B) facing each other and extended along a depth direction (X1, X2); and
a pair of second side walls (9A, 9B) facing each other and extended along a lateral direction (Y1, Y2) intersecting with the depth direction (X1, X2),
wherein the secondary battery (1) further comprises a pair of terminals (27A, 27B) attached to an outer surface of the first container member (5), each of the terminals (27A, 27B) provided in a range in which a corresponding one of the pair of first side walls (8A, 8B) is extended in the circumferential direction of the opening (12), and
wherein the side plate part (52A, 52B) is provided only in a range in which the pair of second side walls (9A, 9B) are extended in the circumferential direction of the opening (12).

6. A battery pack (70) comprising more than one secondary battery (1) of any one of claims 1 to 5.

7. The battery pack (70) according to claim 6, wherein
the more than one secondary battery (1) includes a first secondary battery (1α) and a second secondary battery (1β) that are arranged adjacent to each other, and
the second container member (6) of the first secondary battery (1α) faces the bottom wall (7) of the second secondary battery (1β) with the base (51) of the attachment member (50) of the second secondary battery (1β) interposed therebetween.

8. The battery pack (70) according to claim 7, wherein the attachment member (50) of the second secondary battery (1β) prevents the first container member (5) of the second secondary battery (1β) from coming into contact with the second container member (6) of the first secondary battery (1α).

9. The battery pack (70) according to claim 7 or 8, further comprising a connecting member (71) that electrically connects the first secondary battery (1α)and the second secondary battery (1β) to each other.

## Patentansprüche

1. Sekundärbatterie (1), die Folgendes umfasst:
ein erstes Behälterelement (5), das eine untere Wand (7) und Seitenwände (8A, 8B, 9A, 9B) umfasst und aus einem Metall besteht, wobei ein Aufnahmeraum (11) durch die untere Wand (7) und die Seitenwände (8A, 8B, 9A, 9B) definiert ist, der Aufnahmeraum (11) eine Öffnung (12) auf einer der unteren Wand (7) entgegengesetzten Seite aufweist und das erste Behälterelement (5) einen Flansch (13) umfasst, der von einer Öffnungskante (15) der Öffnung (12) in Bezug auf die Seitenwände (8A, 8B, 9A, 9B) nach außen hervorsteht;
eine Elektrodengruppe (10), die eine positive Elektrode (21) und eine negative Elektrode (22) umfasst und in dem Aufnahmeraum (11) aufgenommen ist;
ein zweites Behälterelement (6), das aus einem Metall besteht und so angeordnet ist, dass es dem Flansch (13) in einem geschlossenen Zustand der Öffnung (12) des Aufnahmeraums (11) zugewandt ist, wobei das zweite Behälterelement (6) an den Flansch (13) geschweißt ist; und
ein Anbringungselement (50), das an dem ersten Behälterelement (5) angebracht ist,
wobei das Anbringungselement (50) Folgendes umfasst:
eine Basis (51), die an eine äußere Fläche der unteren Wand (7) stößt; und
einen Seitenplattenteil (52A, 52B), der sich von der Basis (51) hin zu einer Seite erstreckt, auf der sich der Flansch (13) befindet, und über mindestens einem Teilbereich in einer Umfangsrichtung der Öffnung (12) bereitgestellt ist,
wobei der Seitenplattenteil (52A, 52B) einer äußeren Fläche der Seitenwand (9A, 9B) des ersten Behälterelements (5) mit einem Spalt (56A, 56B) zwischen dem Seitenplattenteil (52A, 52B) und der Seitenwand (9A, 9B) zugewandt ist,
wobei ein Durchgang für ein Kühlmittel in dem Spalt (56A, 56B) zwischen dem Seitenplattenteil (52A, 52B) und der Seitenwand (9A, 9B) definiert ist,
**dadurch gekennzeichnet, dass**:
das Anbringungselement (50) eine Isolierschicht (61) umfasst,
wobei eine Fläche der Basis (51) und des Seitenplattenteils (52A, 52B), die einer Seite entgegengesetzt zu einer Seite zugewandt ist, auf der sich das erste Behälterelement (5) befindet, aus der Isolierschicht (61) gebildet ist,
wobei das Anbringungselement (50) eine Metallschicht (62) umfasst, die der Isolierschicht (61) in der Basis (51) und dem Seitenplattenteil (52A, 52B) benachbart gestapelt ist und eine höhere Wärmeleitfähigkeit aufweist als die Isolierschicht (61), und
wobei die Metallschicht (62) an die äußere Fläche der unteren Wand (7) in dem Anbringungselement (50) stößt, und
wobei das Anbringungselement (50) Folgendes umfasst:
einen sich nach innen erstreckenden Teil (65A, 65B), in dem die Isolierschicht (61) und die Metallschicht (62) sich von dem Seitenplattenteil (52A, 52B) an einer von der Basis (51) entfernten Position hin zu einer Seite nach innen erstrecken, auf der sich der Flansch (13) befindet, und wobei die Metallschicht (62) einer Seite, auf der die Basis (51) sich befindet, in Bezug auf die Isolierschicht (61) benachbart ist; und
einen gefalteten Teil (66A, 66B), der an einem inneren Ende des sich nach innen erstreckenden Teils (65A, 65B) bereitgestellt ist, wobei die Isolierschicht (61) und die Metallschicht (62) in einem Zustand gefaltet sind, in dem eine nach innen gewandte Fläche aus der Isolierschicht (61) gebildet ist.

2. Sekundärbatterie (1) nach Anspruch 1, wobei eine Dicke des Anbringungselements (50) zwischen 0,5 und 1,2 mm beträgt.

3. Sekundärbatterie (1) nach Anspruch 1 oder 2, wobei
das Anbringungselement (50) ferner einen Endstückteil (67A, 67B) umfasst, in dem sich die Isolierschicht (61) und die Metallschicht (51) zwischen dem gefalteten Teil (66A, 66B) und einer äußeren Kante (E) des Anbringungselements (50) erstrecken, und
der Endstückteil (67A, 67B) sich zwischen dem gefalteten Teil (66A, 66B) und dem Seitenplattenteil (52A, 52B) und zwischen dem sich nach innen erstreckenden Teil (65A, 65B) und der unteren Wand (7) befindet.

4. Sekundärbatterie (1) nach einem der Ansprüche 1 bis 3, wobei
eine Dicke der Isolierschicht (61) zwischen 0,05 mm und 0,3 mm beträgt, und
eine Dicke der Metallschicht (62) zwischen 0,5 mm und 0,8 mm beträgt.

5. Sekundärbatterie (1) nach einem der Ansprüche 1 bis 4,
wobei die Seitenwand (8A, 8B, 9A, 9B) des ersten Behälterelements (5) Folgendes umfasst:
ein Paar erste Seitenwände (8A, 8B), die einander zugewandt sind und sich entlang einer Tiefenrichtung (X1, X2) erstrecken; und
ein Paar zweite Seitenwände (9A, 9B), die einander zugewandt sind und sich entlang einer seitlichen Richtung (Y1, Y2) erstrecken, welche die Tiefenrichtung (X1, X2) schneidet,
wobei die Sekundärbatterie (1) ferner ein Paar Anschlüsse (27A, 27B) umfasst, die an einer äußeren Oberfläche des ersten Behälterelements (5) angebracht sind, wobei jeder der Anschlüsse (27A, 27B) in einem Bereich bereitgestellt ist, in dem eine entsprechende von dem Paar von ersten Seitenwänden (8A, 8B) sich in der Umfangsrichtung der Öffnung (12) erstreckt, und
wobei der Seitenplattenteil (52A, 52B) nur in einem Bereich bereitgestellt ist, in dem das Paar zweite Seitenwände (9A, 9B) sich in der Umfangsrichtung der Öffnung (12) erstrecken.

6. Batteriepack (70), der mehr als eine Sekundärbatterie (1) nach einem der Ansprüche 1 bis 5 umfasst.

7. Batteriepack (70) nach Anspruch 6, wobei die mehr als eine Sekundärbatterie (1) eine erste Sekundärbatterie (1α) und eine zweite Sekundärbatterie (1β) umfassen, die einander benachbart angeordnet sind, und
das zweite Behälterelement (6) der ersten Sekundärbatterie (1α) der unteren Wand (7) der zweiten Sekundärbatterie (1β) mit der dazwischen angeordneten Basis (51) des Anbringungselements (50) der zweiten Sekundärbatterie (1β) zugewandt ist.

8. Batteriepack (70) nach Anspruch 7, wobei das Anbringungselement (50) der zweiten Sekundärbatterie (1β) verhindert, dass das erste Behälterelement (5) der zweiten Sekundärbatterie (1β) mit dem zweiten Behälterelement (6) der ersten Sekundärbatterie (1α) in Kontakt gelangt.

9. Batteriepack (70) nach Anspruch 7 oder 8, der ferner ein Verbindungselement (71) umfasst, das die erste Sekundärbatterie (1α) und die zweite Sekundärbatterie (1β) miteinander verbindet.

## Revendications

1. Batterie secondaire (1) comprenant :
un premier élément contenant (5) incluant une paroi inférieure (7) et des parois latérales (8A, 8B, 9A, 9B), et constitué d'un métal, dans laquelle un espace d'accueil (11) est défini par la paroi inférieure (7) et les parois latérales (8A, 8B, 9A, 9B), l'espace d'accueil (11) comporte une ouverture (12) sur un côté à l'opposé de la paroi inférieure (7), et le premier élément contenant (5) inclut une bride (13) saillante vers l'extérieur depuis un bord d'ouverture (15) de l'ouverture (12) par rapport aux parois latérales (8A, 8B, 9A, 9B) ;
un groupe d'électrodes (10) incluant une électrode positive (21) et une électrode négative (22), et accueilli dans l'espace d'accueil (11) ;
un deuxième élément contenant (6) constitué d'un métal, et agencé pour faire face à la bride (13) dans un état de fermeture de l'ouverture (12) de l'espace d'accueil (11), le deuxième élément contenant (6) étant soudé à la bride (13) ; et
un élément de fixation (50) fixé au premier élément contenant (5),
dans laquelle l'élément de fixation (50) inclut :
une base (51) venant en butée contre une surface extérieure de la paroi inférieure (7) ; et
une partie de plaque latérale (52A, 52B) étendue depuis la base (51) vers un côté sur lequel la bride (13) est située, et prévue sur au moins une plage partielle dans une direction circonférentielle de l'ouverture (12),
dans laquelle la partie de plaque latérale (52A, 52B) fait face à une surface extérieure de la paroi latérale (9A, 9B) du premier élément contenant (5) avec un espacement (56A, 56B) entre la partie de plaque latérale (52A, 52B) et la paroi latérale (9A, 9B),
dans laquelle un passage pour un réfrigérant est défini dans l'espacement (56A, 56B) entre la partie de plaque latérale (52A, 52B) et la paroi latérale (9A, 9B),
**caractérisée en ce que**
l'élément de fixation (50) inclut une couche isolante (61),
dans laquelle une surface de la base (51) et de la partie de plaque latérale (52A, 52B) faisant face à un côté à l'opposé d'un côté sur lequel le premier élément contenant (5) est situé est constituée de la couche isolante (61),
dans laquelle l'élément de fixation (50) inclut une couche métallique (62) empilée adjacente à la couche isolante (61) dans la base (51) et la partie de plaque latérale (52A, 52B) et présentant une conductivité thermique supérieure à celle de la couche isolante (61), et
dans laquelle la couche métallique (62) vient en butée contre la surface extérieure de la paroi inférieure (7) dans l'élément de fixation (50), et
dans laquelle l'élément de fixation (50) inclut :
une partie s'étendant vers l'intérieur (65A, 65B) dans laquelle la couche isolante (61) et la couche métallique (62) sont étendues vers l'intérieur depuis la partie de plaque latérale (52A, 52B) à une position à l'écart de la base (51) vers un côté sur lequel la bride (13) est située, et dans laquelle la couche métallique (62) est adjacente à un côté sur lequel la base (51) est située par rapport à la couche isolante (61) ; et
une partie pliée (66A, 66B) prévue à l'extrémité intérieure de la partie s'étendant vers l'intérieur (65A, 65B), dans laquelle la couche isolante (61) et la couche métallique (62) sont pliées dans un état dans lequel une surface faisant face vers l'intérieur est constituée de la couche isolante (61).

2. Batterie secondaire (1) selon la revendication 1, dans laquelle une épaisseur de l'élément de fixation (50) est de 0,5 mm à 1,2 mm.

3. Batterie secondaire (1) selon la revendication 1 ou 2, dans laquelle
l'élément de fixation (50) inclut en outre une partie de pièce d'extrémité (67A, 67B) dans laquelle la couche isolante (61) et la couche métallique (51) sont étendues entre la partie pliée (66A, 66B) et un bord extérieur (E) de l'élément de fixation (50), et
la partie de pièce d'extrémité (67A, 67B) est située entre la partie pliée (66A, 66B) et la partie de plaque latérale (52A, 52B) et entre la partie s'étendant vers l'intérieur (65A, 65B) et la paroi inférieure (7).

4. Batterie secondaire (1) selon l'une quelconque des revendications 1 à 3, dans laquelle
une épaisseur de la couche isolante (61) est de 0,05 mm à 0,3 mm, et
une épaisseur de la couche métallique (62) est de 0,5 mm à 0,8 mm.

5. Batterie secondaire (1) selon l'une quelconque des revendications 1 à 4,
dans laquelle la paroi latérale (8A, 8B, 9A, 9B) du premier élément contenant (5) inclut :
une paire de premières parois latérales (8A, 8B) se faisant face l'une à l'autre et étendues dans une direction de profondeur (X1, X2) ; et
une paire de deuxièmes parois latérales (9A, 9B) se faisant face l'une à l'autre et étendues dans une direction latérale (Y1, Y2) en intersection avec la direction de profondeur (X1, X2),
dans laquelle la batterie secondaire (1) comprend en outre une paire de bornes (27A, 27B) fixées à une surface extérieure du premier élément contenant (5), chacune des bornes (27A, 27B) étant prévue dans une plage dans laquelle l'une correspondante de la paire de premières parois latérales (8A, 8B) est étendue dans la direction circonférentielle de l'ouverture (12), et
dans laquelle la partie de plaque latérale (52A, 52B) est prévue uniquement dans une plage dans laquelle la paire de deuxièmes parois latérales (9A, 9B) sont étendues dans la direction circonférentielle de l'ouverture (12).

6. Bloc-batterie (70) comprenant plusieurs batteries secondaires (1) selon l'une quelconque des revendications 1 à 5.

7. Bloc-batterie (70) selon la revendication 6, dans lequel
les plusieurs batteries secondaires (1) incluent une première batterie secondaire (1α) et une deuxième batterie secondaire (1β) qui sont agencées adjacentes l'une à l'autre, et
le deuxième élément contenant (6) de la première batterie secondaire (1α) fait face à la paroi inférieure (7) de la deuxième batterie secondaire (113) avec la base (51) de l'élément de fixation (50) de la deuxième batterie secondaire (113) interposée entre eux.

8. Bloc-batterie (70) selon la revendication 7, dans lequel l'élément de fixation (50) de la deuxième batterie secondaire (113) interdit au premier élément contenant (5) de la deuxième batterie secondaire (113) d'entrer en contact avec le deuxième élément contenant (6) de la première batterie secondaire (1α).

9. Bloc-batterie (70) selon la revendication 7 ou 8, comprenant en outre un élément de liaison (71) qui relie électriquement la première batterie secondaire (1α) et la deuxième batterie secondaire (1β) l'une à l'autre.
